# EUROPEAN PATENT APPLICATION

(11) **EP 4 332 333 A1**
(43) Date of publication of application: **06.03.2024**
(21) Application number: 22193624.8
(22) Date of filing: 02.09.2022
(51) Int. Cl.: E05B 85/10, E05B 81/76

(54) **HANDLE WITH A STRAIN GAUGE MODULE USED AS A SENSOR FOR A CAR DOOR**

(71) Applicant: MINEBEA ACCESSSOLUTIONS ITALIA S.P.A., 10044 Pianezza (IT)
(72) Inventor: AKANOU, Myriam, 10044 PIANEZZA (IT); GUERIN, Anthony, 10044 PIANEZZA (IT); LABALESTRA, Antonio, 10044 PIANEZZA (IT)
(74) Representative: Germain Maureau

(57) **Abstract**

Detection system (1) adapted for a handle of a car access assembly, the detection system (1) comprising: a sensing module (7) including at least one strain gauge (9) having a sensing area and connection points in contact with the sensing area so as to enable the measure of a signal at the connection points; a flexible printed circuit board (11) presenting a first end (13) with at least one connection area adapted to be connected to the connection points of the at least one strain gauge (9) and a second end (15) with a connection arrangement configured to be connected to an electronic control unit.

## Description

### Field of the invention

The present invention concerns a handle with a strain gauge module used as a sensor for triggering the opening of a car door.

### Prior art

A handle adapted to be used for car doors usually comprises a mechanical system to release the blocking of the door. Once triggered, the user can freely pull or push the door.

An alternative for releasing the blocking of the door is to use an electrical system. Once the blocking is released, the functioning is the same: the user can freely pull or push the door.

For example, a strain gauge can act as a sensor to trigger an electrical release of the mechanism blocking the door. A strain gauge is a sensor whose deformation is a function of its electrical resistance when a current is circulating through it.

The use of such a sensor gives satisfaction in that the opening of a car door is easier for the user compared to a mechanical system. Indeed, it suffices to press a part of the handle near the strain gauge module to enable the opening, there is no need to pull the handle before moving the door.

However, a strain gauge is a small component compared to a car handle and there is a difficulty to correctly wire the strain gauge module when mounted inside the handle and/or car door. Depending on the quality of the mounting, the quality of the signal measured by the strain gauge can vary. Indeed, using typical electrical wires may imply mounting difficulties as there is little space inside the handle for connecting electrical wires that measure a signal.

In particular, a low quality soldering of the wires can lead to a fragile electrical connection. Another problem when implementing a strain gauge in a handle is that the obtained signal can suffer from electrical noise resulting from electromagnetic effects due to other parts constituting the handle or the car door.

Therefore, although the use of a strain gauge for a car door seems appropriate for the user experience, there is still some difficulties to implement such sensors as mounting and obtaining a quality signal are difficult.

The present invention aims to solve all or some of the disadvantages mentioned above.

### Summary of the invention

For this purpose, the present invention relates to a detection system adapted for a handle of a car access assembly, the detection system comprising:
a sensing module including at least one strain gauge having a sensing area and connection points in contact with the sensing area so as to enable the measure of a signal at the connection points,
a flexible printed circuit board presenting a first end with at least one connection area adapted to be connected to the connection points of the at least one strain gauge and a second end with a connection arrangement configured to be connected to an electronic control unit.

The use of a flexible printed circuit board as an intermediate element to the electronic control unit is advantageous because it enables to have a good electrical connection to the at least one strain gauge.

Indeed, compared to electrical wires used as intermediate elements, the flexible printed circuit board is designed to establish a reliable connection with the at least one strain gauge.

The flexible printed circuit board is able to be elastically deformed which facilitates the installation inside the handle and/or the car door. In this sense, the term flexible is to be understood as arranged to be elastically deformed without negative consequences on the quality of the current conductivity. This provision enables to easily install the flexible printed circuit board inside the handle and/or car door.

According an aspect of the invention, the strain gauge comprises a substrate and a conductive coating defining the sensing area and the two connection points.

According to an aspect of the invention, the flexible printed circuit board comprises a flexible substrate, for example in plastic, and a conductive layer defining the two connection areas and the connection arrangement. The conductive layer is for example printed on the flexible substrate.

According to an aspect of the invention, the at least one strain gauge may be a full-bridge strain gauge or a half-bridge strain gauge.

According to an aspect of the invention, the handle is an outside handle of the car for example on the driver side. By car it is understood every kind of vehicle in the automotive industry including bus, truck, personal vehicles etc.

According to an aspect of the invention, the connecting points of the at least one strain gauge and the corresponding connection area of the flexible printed circuit board are configured to be connected by at least two distinct soldering points.

This provision enables to have a better connection as there are several soldering points. For comparison, each soldering point is equivalent to an electrical wire soldered to the strain gauge and then connected to the electronic control unit. Using a unique part, i.e. the flexible printed circuit board simplifies the management of the electrical connection, especially when two strain gauges are used.

According to an aspect of the invention, the connecting points of the at least one strain gauge and the corresponding connection area of the flexible printed circuit board are configured to be connected by three distinct soldering points.

An optimal for the reliability of the detection system is obtained when using a total of three conductive fixations per strain gauge.

According to an aspect of the invention, the flexible printed circuit board presents at least one fold defining a three dimensional path between the first end and the second end.

In other words, the flexible circuit board is substantially planar and the at least one fold is dimensioned for defining different portions of the flexible printed circuit board that are angled with respect to each other. It enables an easy insertion of the detection system within the access assembly of the car.

According to an aspect of the invention, the sensing module includes a support and two distant strain gauges attached to the support, the first end of the flexible printed circuit board presenting two branches, each branch having a connection area adapted to be connected to the connection points of the corresponding strain gauge.

The construction is advantageous because the flexible printed circuit board can present a shape that is adapted to the geometry of the inside of the handle and/or car door. According to an aspect of the invention, the support is constituted of a metal material.

According to an aspect of the invention, the support is substantially planar and presents at least one attaching portion configured to be secured on the handle and/or the car door so as to enable the at least one strain gauge to detect a pushing constraint applied on the handle and a pulling constraint applied on the handle.

The support facilitates the installation of the at least one strain gauge since the detection system is designed to be installed as a whole inside the handle and/or car door, the flexible printed circuit board being fixed to the sensing module beforehand.

According to an aspect of the invention, the at least one strain gauge is configured to detect a compression constraint and an extension constraint applied transversally to an extension plane of the support.

According to an aspect of the invention, the at least one attaching portion is an orifice or a slot configured for receiving a screw, for example with mounting ring(s).

Preferably, the support presents two attaching portions, the strain gauges being located between the two attaching portions according to a longitudinal direction of the support.

According to an aspect of the invention, the detection system also comprises the electronic control unit, said electronic control unit comprising a connector configured to cooperate with the connection arrangement of the second end and comprising a rigid printed circuit board configured to track measures from the at least one strain gauge.

This provision enables to have a flexible printed circuit board that serves as a transmission part; the analyzing functions being realized by the rigid printed circuit board. Moreover, the size of the flexible printed circuit board can be very short between the sensing module and the electronic control unit to limit the electrical noise.

According to an aspect of the invention, the connector is attached to the rigid printed circuit board.

According to an aspect of the invention, the electronic control unit comprises an encapsulating box including the rigid printed circuit board and the connector, the encapsulating box being provided with an inlet through opening adapted to receive the second end of the flexible printed circuit board and an outlet through opening adapted to receive an external linking cable configured to be connected to the rigid printed circuit board inside the encapsulating box.

This provision enables to have an isolated electronic control unit dedicated to the measures management of the sensing module. The measures can be accurate as the electronic control unit can be located close to the sensing unit, thus reducing the size of the flexible printed circuit board.

According to an aspect of the invention, the electronic control unit is potted in the encapsulating box.

The provision improves the insulation of the rigid printed circuit board and the connections with the flexible printed circuit board and the external linking cable. The external linking cable includes for example several electric wires.

According to an aspect of the invention, the detection system also comprises an additional sensor provided with a linking element to the electronic control unit or to the flexible printed circuit board.

This provision enables to take the opportunity of having an electronic control unit to integrate the additional sensor. Said additional sensor can be connected to the electronic control unit separately from the flexible printed circuit board or by using the latter.

According to an aspect of the invention, the additional sensor uses a near field communication protocol and is intended to be integrated in the handle and/or car door to detect a user complementary device in proximity.

According to an aspect of the invention, the detection system comprises several sensing modules and several corresponding flexible printed circuit boards adapted to cooperate with the electronic control unit.

A unique electronic control unit can be provided to measure data from several sensing modules to improve the detection of a user pushing or pulling the handle.

The present invention also concerns a car access assembly comprising the car door and the handle mounted on the car door, the car access assembly also comprising a detection system as described above wherein the detection system is configured to be installed in the handle and/or the car door so as to be biased when a pulling or pushing constraint is applied to the handle transversally to an extension plane of the support.

Preferably, the support is in contact with a part of the door and with a part of the handle so that the strain gauges are able to detect and differentiate a pulling constraint and a pushing constraint.

The different aspects defined above that are not incompatible can be combined.

### Brief description of the figures

The invention will be better understood with the aid of the detailed description that is set out below with reference to the appended drawing in which:
- figure 1 is a perspective view of a detection system comprising a sensing module and flexible printed circuit board;
- figure 2 is an exploded perspective view of an access assembly of a car partially represented and the detection system;
- figure 3 is a detailed exploded perspective view of the detection system;
- figure 4 is a detailed perspective view of the access assembly pulled by a user;
- figure 5 is a detailed perspective view of the access assembly pushed by the user;
- figure 6 is a schematic view of the sensing module when pulled by the user, pushed by the user and in absence of any stress;
- figure 7 is a schematic view of the detection system including an additional sensor.

### Description with reference to the figures

In the following detailed description of the figures defined above, the same elements or the elements that are fulfilling identical functions may retain the same references so as to simplify the understanding of the invention.

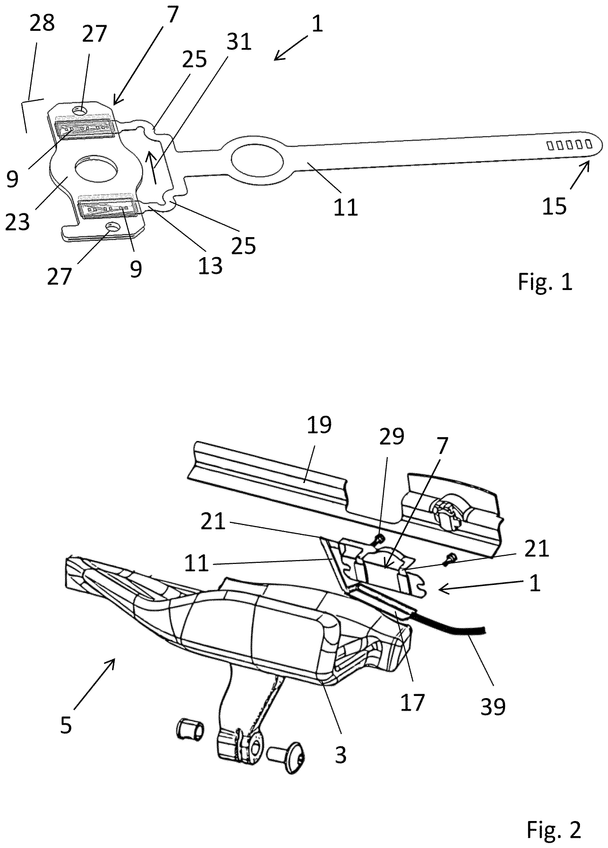

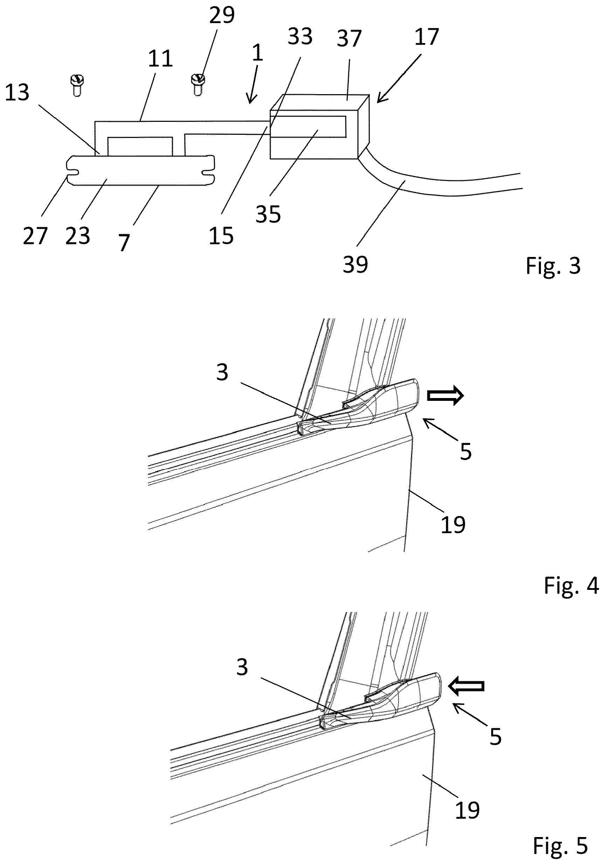

As illustrated in figures 1 to 5, there is depicted a detection system 1 adapted for a handle 3 of a car access assembly 5.

The detection system 1 comprises a sensing module 7 including at least one strain gauge 9 having a sensing area and connection points in contact with the sensing area so as to enable the measure of a signal at the connection points.

The detection system 1 also comprises a flexible printed circuit board 11 presenting a first end 13 with at least one connection area adapted to be connected to the connection points of the at least one strain gauge 9 and a second end 15 with a connection arrangement configured to be connected to an electronic control unit 17.

The flexible printed circuit board 11 is able to be elastically deformed which facilitates the installation inside the handle 3 and/or a car door 19. In this sense, the term flexible is to be understood as arranged to be elastically deformed without negative consequences on the quality of the current conductivity or structure integrity.

The strain gauge 9 comprises a substrate and a conductive coating defining the sensing area and the two connection points.

The flexible printed circuit board 11 comprises a flexible substrate, for example in plastic, and a conductive layer defining the two connection areas and the connection arrangement. The conductive layer is for example printed on the flexible substrate.

The at least one train gauge 9 may be a full-bridge strain gauge or a half-bridge strain gauge.

The handle 3 is an outside handle of the car for example on the driver side. By car it is understood every kind of vehicle in the automotive industry including bus, truck, personal vehicles etc.

The connecting points of the at least one strain gauge 9 and the corresponding connection area of the flexible printed circuit board 11 are configured to be connected by at least two distinct soldering points.

Here, the connecting points of the at least one strain gauge 9 and the corresponding connection area of the flexible printed circuit board 11 are configured to be connected by three distinct soldering points. An optimal for the reliability of the detection system is obtained when using a total of three conductive fixations per strain gauge 9.

The flexible printed circuit board 11 presents at least one fold 21 defining a three dimensional path between the first end 13 and the second end 15.

In other words, the flexible printed circuit board 11 is substantially planar and the at least one fold 21 is dimensioned for defining different portions of the flexible printed circuit board 11 that are angled with respect to each other. It enables an easy insertion of the detection system 1 within the car access assembly 5.

The sensing module 7 includes a support 23 and two distant strain gauges 9 attached to the support 23, the first end 13 of the flexible printed circuit board 11 presenting two branches 25, each branch 25 having a connection area adapted to be connected to the connection points of the corresponding strain gauge 9.

The flexible printed circuit board 11 can present a shape that is adapted to the geometry of the inside of the handle 3 and/or car door 19. The support 23 is constituted of a metal material.

The support 23 is substantially planar and presents at least one attaching portion 27 configured to be secured on the handle 3 and/or the car door 19 so as to enable the strain gauges 9 to detect a pushing constraint applied on the handle and a pulling constraint applied on the handle transversally to the support 23.

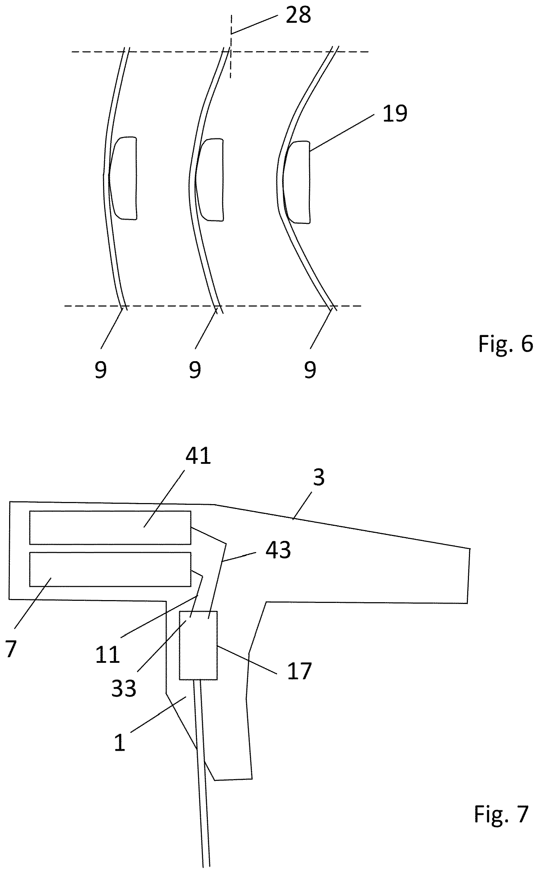

As illustrated in figure 6, the at least one strain gauge 9 is configured to detect a compression constraint (on the right) and an extension constraint (on the left) applied transversally to an extension plane 28 of the support 23. In the middle is depicted a state without any constraint.

The at least one attaching portion 27 is an orifice or a slot configured for receiving a screw 29, for example with mounting ring(s).

The support 23 presents two attaching portions 27, the strain gauges 9 being located between the two attaching portions 27 according to a longitudinal direction 31 of the support 23.

The detection system 1 also comprises the electronic control unit 17, said electronic control unit 17 comprising a connector 33 configured to cooperate with the connection arrangement of the second end 15 and comprising a rigid printed circuit board 35 configured to track measures from the strain gauges 9.

The connector 33 is attached to the rigid printed circuit board 35.

The electronic control unit 17 comprises an encapsulating box 37 including the rigid printed circuit board 35 and the connector 33, the encapsulating box 37 being provided with an inlet through opening adapted to receive the second end 15 of the flexible printed circuit board 11 and an outlet through opening adapted to receive an external linking cable 39 configured to be connected to the rigid printed circuit board 35 inside the encapsulating box 37.

The electronic control unit 17 is potted in the encapsulating box 37.

The provision improves the insulation of the rigid printed circuit board 35 and the connections with the flexible printed circuit board 11 and the external linking cable 39. The external linking cable 39 includes for example several electric wires.

As illustrated in figure 7, the detection system 1 also comprises an additional sensor 41 provided with a linking element 43 to the electronic control unit 17. This provision enables to take the opportunity of having an electronic control unit 17 to integrate the additional sensor 41. Said additional sensor 41 can be connected to the electronic control unit 17 separately from the flexible printed circuit board.

The additional sensor 41 uses a near field communication protocol and is intended to be integrated in the handle 3 and/or car door 19 to detect a user complementary device in proximity.

The detection system 1 may also comprise several sensing modules 7 and several corresponding flexible printed circuit board 11 adapted to cooperate with the electronic control unit 17.

A unique electronic control unit 17 can be provided to measure data from several sensing modules 7 to improve the detection of a user pushing or pulling the handle 3.

The present invention also concerns a car access assembly 5 comprising the car door 19 and the handle 3 mounted on the car door 19, the car access assembly 5 also comprising a detection system 1 as described above wherein the detection system 1 is configured to be installed in the handle 3 and/or the car door 19 so as to be biased when a pulling or pushing constraint is applied to the handle 3 transversally to an extension plane 28 of the support 23, i.e. transversally to the car door 19.

The support 23 is in contact with a part of the door and with a part of the handle 3 so that the strain gauges 9 are able to detect and differentiate a pulling constraint and a pushing constraint.

From the above description, it appears that the use of a flexible printed circuit board 11 as an intermediate element to the electronic control unit 17 is advantageous because it enables to have a good electrical connection to the at least one strain gauge 9.

Indeed, compared to electrical wires used as intermediate elements, the flexible printed circuit board 11 is designed to establish a reliable connection with the at least one strain gauge 9.

As goes without saying, the invention is not limited to the sole embodiment described above by way of example, it encompasses all the variants.

## Claims

1. Detection system (1) adapted for a handle (3) of a car access assembly (5), the detection system (1) comprising:
- a sensing module (7) including at least one strain gauge (9) having a sensing area and connection points in contact with the sensing area so as to enable the measure of a signal at the connection points,
- a flexible printed circuit board (11) presenting a first end (13) with at least one connection area adapted to be connected to the connection points of the at least one strain gauge (9) and a second end (15) with a connection arrangement configured to be connected to an electronic control unit (17).

2. Detection system (1) according to claim 1, wherein the connecting points of the at least one strain gauge (9) and the corresponding connection area of the flexible printed circuit board (11) are configured to be connected by at least two distinct soldering points.

3. Detection system (1) according to claim 2, wherein the connecting points of the at least one strain gauge (9) and the corresponding connection area of the flexible printed circuit board (11) are configured to be connected by three distinct soldering points.

4. Detection system (1) according to one of the claims 1 to 3, wherein the flexible printed circuit board (11) presents at least one fold (21) defining a three dimensional path between the first end (13) and the second end (15).

5. Detection system (1) according to one of the claims 1 to 4, wherein the sensing module (7) includes a support (23) and two distant strain gauges (9) attached to the support (23), the first end (13) of the flexible printed circuit board (11) presenting two branches (25), each branch (25) having a connection area adapted to be connected to the connection points of the corresponding strain gauge (9).

6. Detection system (1) according to claim 5, wherein the support (23) is substantially planar and presents at least one attaching portion (27) configured to be secured on the handle (3) and/or the car door (19) so as to enable the at least one strain gauge (9) to detect a pushing constraint applied on the handle (3) and a pulling constraint applied on the handle (3).

7. Detection system (1) according to one of the claims 1 to 6, also comprising the electronic control unit (17), said electronic control unit (17) comprising a connector (33) configured to cooperate with the connection arrangement of the second end (15) and comprising a rigid printed circuit board (35) configured to track measures from the at least one strain gauge (9).

8. Detection system (1) according to claim 7, wherein the electronic control unit (17) comprises an encapsulating box (37) including the rigid printed circuit board (35) and the connector (33), the encapsulating box (37) being provided with an inlet through opening adapted to receive the second end (15) of the flexible printed circuit board (11) and an outlet through opening adapted to receive an external linking cable (39) configured to be connected to the rigid printed circuit board (35) inside the encapsulating box (37).

9. Detection system (1) according to claim 8, wherein the electronic control unit (17) is potted in the encapsulating box (37).

10. Detection system (1) according to one of the claims 7 to 9, also comprising an additional sensor (41) provided with a linking element (43) to the electronic control unit (17) or to the flexible printed circuit board (11).

11. Detection system (1) according to one of the claims 7 to 10, comprising several sensing modules (7) and several corresponding flexible printed circuit boards (11) adapted to cooperate with the electronic control unit (17).

12. Car access assembly (5) comprising the car door (19) and the handle (3) mounted on the car door (19), the car access assembly (5) also comprising a detection system (1) according to one of the claims 1 to 11 wherein the detection system (1) is configured to be installed in the handle (3) and/or the car door (19) so as to be biased when a pulling or pushing constraint is applied to the handle transversally to an extension plane (28) of the support (23).
